Europäisches Patentamt

European Patent Office

Office européen des brevets

(11) Veröffentlichungsnummer: **0 081 841**
**B1**

(12) **EUROPÄISCHE PATENTSCHRIFT**

(45) Veröffentlichungstag der Patentschrift: 29.07.87

(21) Anmeldenummer: 82111577.1

(22) Anmeldetag: 14.12.82

(51) Int. Cl.⁴: **B 60 D 3/00,** E 01 H 5/06,
E 01 H 1/02, B 62 D 49/04,
E 02 F 3/76

(54) Schubkupplung für Frontarbeitsgeräte an Kraftfahrzeugen.

(30) Priorität: 14.12.81 DE 3149436

(43) Veröffentlichungstag der Anmeldung:
22.06.83 Patentblatt 83/25

(45) Bekanntmachung des Hinweises auf die
Patenterteilung:
29.07.87 Patentblatt 87/31

(84) Benannte Vertragsstaaten:
AT BE CH DE FR GB IT LI LU NL SE

(56) Entgegenhaltungen:
DE-A-2 256 719
DE-B-1 012 266
DE-C- 642 847
FR-A-1 191 682
FR-A-2 450 167
GB-A- 638 455
US-A-1 502 591
US-A-1 522 378
US-A-1 867 178
US-A-2 163 279
US-A-2 426 410
US-A-2 616 191

(73) Patentinhaber: Rossmann, Michael
Zugspitzstrasse 52 1/2
D-8035 Gauting (DE)

(72) Erfinder: Rossmann, Michael
Zugspitzstrasse 52 1/2
D-8035 Gauting (DE)

(74) Vertreter: Weinmiller, Jürgen
Lennéstrasse 9 Postfach 24
D-8133 Feldafing (DE)

(56) Entgegenhaltungen:
US-A-2 695 467
US-A-2 862 315
US-A-3 035 856
US-A-3 688 847
US-A-3 749 180
US-A-3 843 162
US-A-4 265 465

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Schubkupplung gemäß dem Oberbegriff des Anspruchs 1 für den Anbau von Frontarbeitsgeräten wie z.B. Schneepflugschar, Planierschild, Kehrbürste, an Kraftfahrzeugen mit Anhängerkupplung.

Eine Schubkupplung mit den Merkmalen des Oberbegriffs des Anspruchs 1 ist z.B. aus der Druckschrift US—A—3 688 847 bekannt.

Bei derartigen Zusatzgeräten ist eine Verbindung zum Kraftfahrzeug erforderlich, die große Schubkräfte in Fahrtrichtung übertragen kann, einen kleineren Teil Seitenkräfte aufnimmt, unabhängig von Bewegungen des Schubfahrzeuges dem Arbeitsgerät Anpaßbarkeit an die Fahrbahn ermöglicht, beim Rückwärtsfahren bzw. beim Fahren ohne Arbeitstätigkeit von der Fahrbahn abgehoben werden kann und mit wenigen Handgriffen von dem Fahrzeug an- und abgekuppelt werden kann.

Früher brauchten Fahrzeuge, die für den Anbau von Frontarbeitsgeräten herangezogen werden sollten, zwischen diesem und dem Fahrzeug eine Schubkupplung, die am Fahrgestell des Fahrzeugs befestigt ist und mit einer mit Bohrungen versehenen Kupplungsplatte über die vordere Front des Fahrzeugs vorsteht. Es handelte sich hierbei um einen kostspieligen Spezialanbau, der für jeden Fahrzeugtyp speziell entwickelt sein muß und in der Regel ähnlich wie eine heckseitige Anhängekupplung als dauernde Zusatzausstattung vorne am Fahrzeug bleibt. Nachdem mit dieser Schubkupplung wesentliche Kräfte, vor allem auch Stoßkräfte, auf das Fahrzeug übertragen werden müssen, ist ein einfaches Anbringen, z.B. an den Fahrgestellenden oder sogar nur an der Stoßstange, nicht ausreichend. Es bedarf zur gleichmäßigen Kraftübertragung meist sogar Verlängerungen, die an rückwärtigen Fahrzeugpartien nochmals verankert sind (siehe z.B. Patentdokument DE—A—2256719). Weiterhin ist es beim Rückwärtsfahren, aber auch beim Vorwärtsfahren ohne Arbeitstätigkeit erforderlich, daß das Frontarbeitsgerät, z.B. eine Schneepflugschar, durch einen vom Fahrzeugführer gesteuerten Hebemechanismus angehoben bzw. abgesetzt werden kann. Die aus der genannten Druckschrift bekannten Vorrichtungen besitzen zu diesem Zweck ein Parallelführungsgestänge zwischen Kupplungsplatte am Fahrzeug und dem Anbaugerät, welches durch einen hydraulisch oder pneumatisch betriebenen Druckzylinder bewegt wird.

Durch diese Tatsache ist für den Einsatz solcher Geräte ein kostspieliger Aufwand am Fahrzeug erforderlich, der auch voraussetzt, daß das Fahrgestell hierzu geeignet ist. So ist z.B. eine heute übliche selbsttragende Stahlblechkarosserie eines PKW oder Kleinlasters schlecht geeignet. Auch möchte man an einem PKW keinen dauernden Vorbau haben, wenn man nur im Winter einige Male Schnee räumen will, da ein solcher Vorbau unschön aussieht, unnötiges Zusatzgewicht bringt, Veränderungen an Knautschzonen bedeutet und die Zugänglichkeit bei Reparaturen am Fahrzeug verschlechtert. Außerdem wären derartige Veränderungen am Fahrzeug von behördlicher Seite oftmals genehmigungspflichtig.

Ähnliche Argumente lassen sich auch bei Schleppern und Zugmaschinen sowie Geländewagen vorbringen, welche man für gelegentliche Räumarbeiten nicht mit einem kostspieligen Frontanbau ausstatten möchte. Aus diesen Gründen ist der Anbau derartiger Schubkupplungen für Frontarbeitsgeräte nur bei Spezialfahrzeugen üblich. Es sind dies meist Lastkraftwagen oder sonstige Arbeitsfahrzeuge, die nur von gewerblichen Betrieben oder von Straßenbau- und Forstämtern gehalten werden. Ein weiterer Nachteil der bekannten Ausführungen ist die für Hub- und Senkbewegung notwendige Gestängekonstruktion mit Drehpunkten. Diese muß für die Schubübertragung solide bemessen werden, genügend Schenkellängen haben und für Querkräfte diagonalversteift sein. Das bedeutet Eigengewicht und einen nicht unerheblichen Kostenaufwand.

Aus der obengenannten Druckschrift US—A—3 688 847 ist ein Kübelwagen bekannt, an dessen Anhängevorrichtung ein Schubrahmen befestigt werden kann. Dieser Schubrahmen ist an der Vorderachse des Wagens zu beiden Seiten von dessen Längsachse so angelenkt, daß das Frontarbeitsgerät bei Bedarf von Hand angehoben werden kann. Eine solche Konstruktion eignet sich ebenfalls nur für Spezialfahrzeuge mit besonders stabilem Fahrgestell, nicht jedoch für übliche PKW mit selbsttragender Karosserie, da seitliche Kräfte, wie sie z.B. bei einseitig wirkender Schneepflugschar auftreten, das Fahrgestell verwinden würden.

Ähnliche Bemerkungen gelten für die Konstruktion gemäß der Druckschrift US—A—3 749 180, die für einen schweren Traktor gedacht ist. Auch hier ist der Schubrahmen starr über mindestens zwei Punkte zu beiden Seiten der Fahrzeuglängsachse mit dem sehr stabilen Chassis des Fahrzeugs verbunden.

Aufgabe der Erfindung ist es gegenüber diesem Stand der Technik, einen Schubrahmen anzugeben, der sich auch zur Verwendung an einem normalen PKW eignet, d.h., der nur geringe Verwindungskräfte auf das Chassis des Fahrzeugs überträgt.

Diese Aufgabe wird durch die im Anspruch 1 gekennzeichneten Maßnahmen gelöst. Bezüglich von Merkmalen bevorzugter Ausführungsformen der Erfindung wird auf die Unteransprüche verwiesen.

Ein Ausführungsbeispiel der Erfindung ist in den Zeichnungen dargestellt und wird im Folgenden näher beschrieben.

Es zeigen:

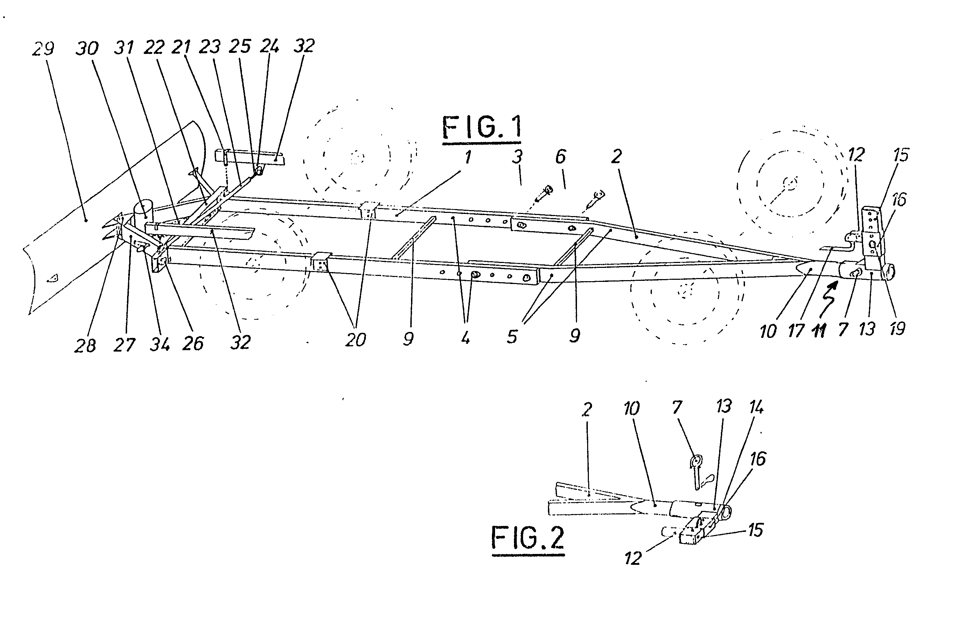

Fig. 1 eine erfindungsgemäße Schubkupplung in perspektivischer Ansicht mit angebauter Schneepflugschar. Die Befestigungspunkte am Kraftfahrzeug, und zwar die Anhängekupplung und die vorderen Längsholme, sind ebenso wie die Lage der Räder angedeutet;

Fig. 2 das hintere Ende der Schubkupplung nach Fig. 1 in perspektivischer Ansicht, nach der Seite umgelegt;

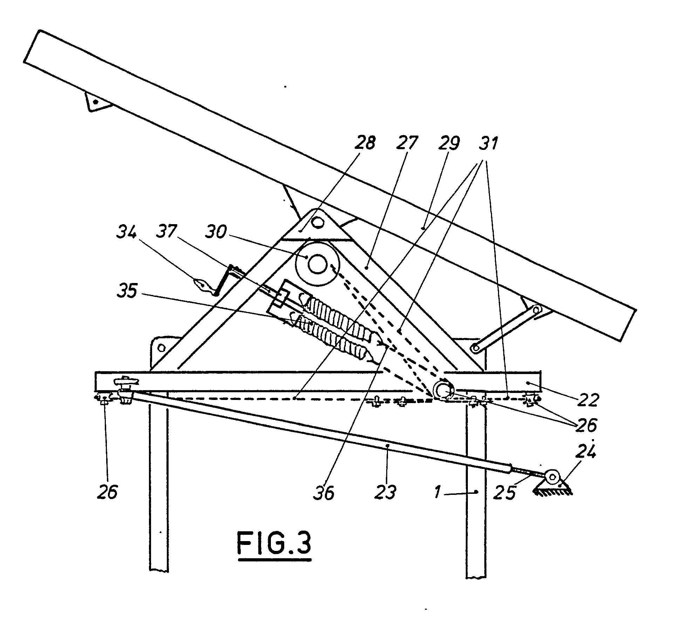

Fig. 3 das vordere Ende der Schubkupplung nach Fig. 1 mit Schneepflugschar, Querführungsstange, Handkurbel mit Federzug und Hubmotor sowie mit den Seilführungen;

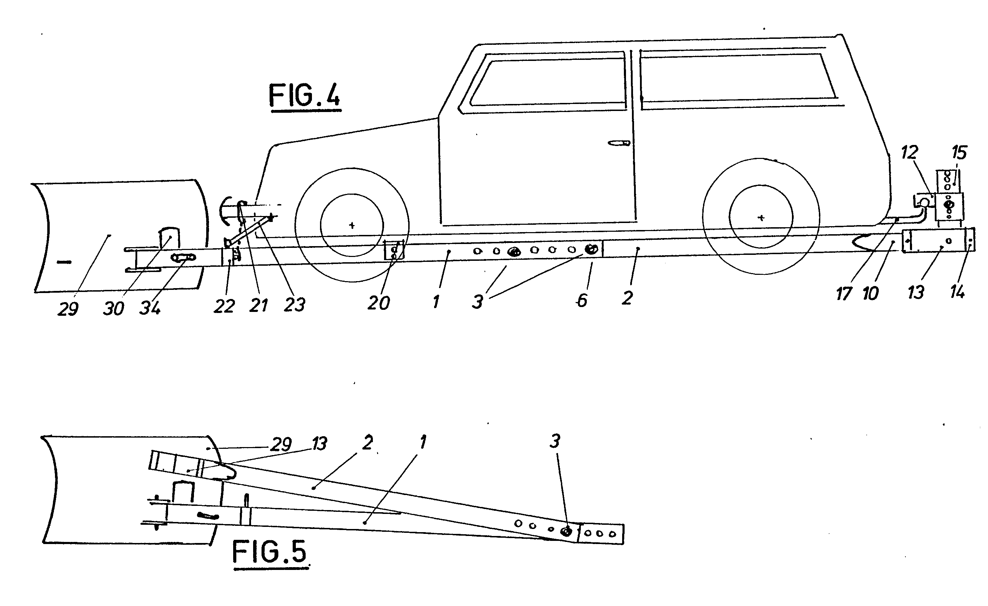

Fig. 4 die Schubkupplung gemäß Fig. 1 von der Seite gesehen, mit Schneepflugschar montiert an ein Kraftfahrzeug mit Anhängerkupplung, betriebsbereit;

Fig. 5 die Schubkupplung gemäß Fig. 1 mit gefaltetem Rahmenteil für platzsparende Unterbringung;

Fig. 6 das hintere Ende der Schubkupplung gemäß Fig. 1 in Schnittzeichnung und vergrößertem Maßstab mit eingebauter Feder und Stoßdämpfer.

Die dargestellte Schubkupplung besteht aus einem zweiteiligen Rahmen, nämlich einem vorderen Rahmenteil 1 mit parallelen Holmen 4 und einem hinteren Rahmenteil 2 mit nach hinten spitz zulaufenden Holmen 5. Das hintere Rahmenteil 2 überlappt mit seinem zwei Anschlußenden von innen die Anschlußenden des vorderen Rahmenteils 1 und ist mit diesem durch je zwei Querbolzen 3 verbunden. Durch eine Lochreihe in den Anschlußenden des vorderen Rahmenteiles 1 kann das hintere Rahmenteil in verschiedene Längspositionen eingehängt werden, wodurch die gesamte Schubkupplung der jeweiligen Länge des Kraftfahrzeuges angepaßt wird. Durch Herausnehmen des hinteren Querbolzens 6 kann das hintere Rahmenteil nach vorne umgelegt werden.

Die Längsholme 4 sind aus geeigneten Profilstangen oder Rohren mit ausreichender mechanischer Festigkeit gegen horizontales Ausknicken hergestellt. Im vorderen sowie im hinteren Rahmenteil sind zur Versteifung Querstreben 9 befestigt. Die Längsholme 5 des hinteren Rahmenteils 2 laufen spitz zusammen und enden an einem runden Endrohr 10, auf welchem sich ein umlegbares Kupplungsende 11 befindet. Dieses besitzt ein rundes Rohr 13, dessen Durchmesser so gewählt ist, daß es mit einem leichten Schiebesitz über das etwas dünnere Endrohr 10 geschoben werden kann.

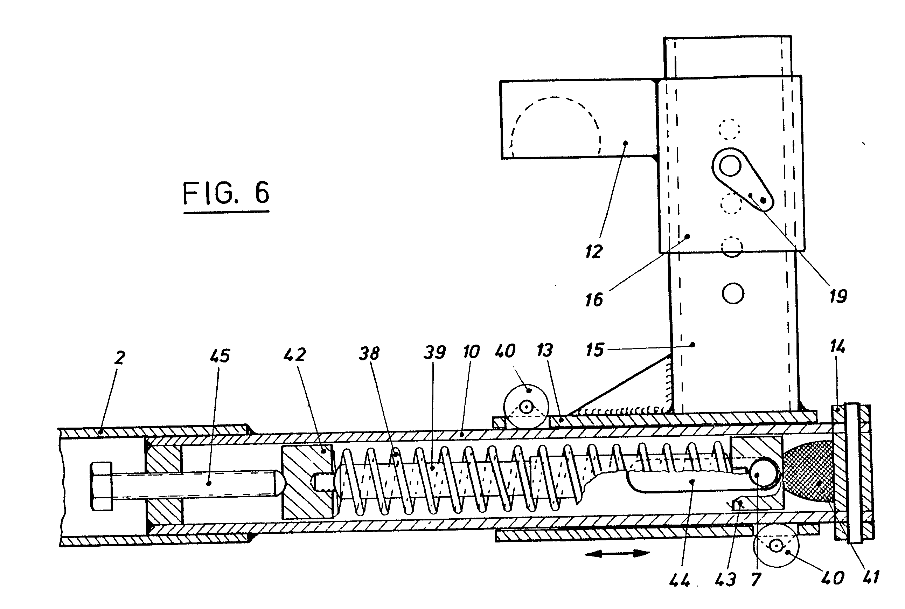

In diesem Endrohr 10 befindet sich (siehe Fig. 6) eine Druckfeder 38, welche zwischen zwei Gleitstücken 42, 43 wirkt. Das vordere Gleitstück 42 kann mit einer Stellschraube 45 in Längsrichtung verstellt werden, wodurch die Feder 38 mehr oder weniger vorgespannt wird. Das hintere Gleitstück 43 wird durch den Querbolzen 7 mit dem Rohr 13 verbunden. Zusätzlich ist in der Feder 38 noch ein Stoßdämpfer 39 angeordnet, der an den beiden Gleitstücken befestigt ist. In dem Endrohr 10 befindet sich ein Langloch 44, das so lange ist wie der Federweg und in welchem der Querbolzen 7 beweglich ist. Durch diese Anordnung wird bei steigender Schubkraft bzw. plötzlicher Stoßbelastung das Gegenstück 12 parallel zur Achse des Endrohrs 10 verschoben und die Feder 38 wird dabei gespannt. Wenn die Belastung nachläßt bzw. plötzlich aufhört wird beim Zurückdrücken der Feder der Schwung von einem Puffer 41 aufgefangen, der sich vor einem Endflasch 14 des Rohres 10 befindet.

Damit das größere Außenrohr 13 unter Last auf dem kleineren Innenrohr 10 nicht klemmt, sind zwei Stützrollen 40 an dem größeren Rohr angebracht, welche auf dem kleineren, inneren abrollen und damit die Reibung verringern.

Auf dem Rohr 13 ist ein Rechteckrohr 15 befestigt, über welches ein kurzes Stück eines etwas größeren Rohres 16 geschoben ist, an dem das eigentliche Gegenstück 12 zur Fahrzeug-Anhängerkupplung 17 angebracht ist. In beiden Rechteckrohren befinden sich Querbohrungen, durch welche ein Bolzen 19 gesteckt werden kann. Durch diese Lochreihe ist die Höhe der Kröpfung des Kupplungsendes 11 dem jeweiligen Fahrzeug anpaßbar. Zum seitlichen Umschwenken wird der untere Querbolzen 7 herausgenommen, wodurch sich das ganze Kupplungsende 11 waagrecht nach der Seite umlegen läßt.

Auf den Längsholmen 4 befindet sich im vorderen Bereich je ein Endanschlag 20, der in der vom Boden abgehobenen Stellung an einer geeigneten Stelle an der Fahrzeugunterseite anliegt. Diese Endanschläge sind z.B. durch eine Klemmschraube verstellbar angebracht. Das vordere Rahmenteil hat einen Querholm 22, welcher sich etwa im Bereich unter der vorderen Stoßstange befindet und an welchem der Querführungsstab 23 beweglich befestigt ist. Die andere Befestigungsstelle 24 des Querführungsstabes befindet sich am Tragwerk des Fahrzeuges 32.

Zur exakten Mittigkeitseinstellung des Schubrahmens, die von der Länge des Querführungsstabes bzw. von der Lage des Befestigungspunktes am Fahrzeug abhängt, ist ein Ende des Querführungsstabes mit einer Gewindespindel 25 ausgestattet, durch welche die Länge genau eingestellt werden kann.

Am selben Querholm 22 sind die Umlenkseilrollen 26 für die Hubeinrichtung gelagert, je eine außerhalb der Längsholme und zwei innerhalb der Längsholme. Vor diesem Querholm befindet sich ein kurzer Vorbau 27, an dessen Spitze sich die Aufnahme 28 für das Frontarbeitsgerät befindet. In der Darstellung ist hier eine Schneeräumschar 29 angebracht. In diesem Vorbau befindet sich ein Motor 30 mit Seilzug 31 für zwei Seile, die über die Umlenkrollen 26 geführt am Tragwerk 32 des Fahrzeuges rechts und links, z.B. mit Haken 21, eingehängt werden. Zusätzlich ist als Hubhilfe eine Handkurbel 34 mit Spindel 37 eingebaut, welche über zwei Zugfedern 35 ebenfalls die zwei Seile 36 spannt. Die Erfindung ist nicht auf das dargestellte bevorzugte Ausführungsbeispiel in allen Einzelheiten beschränkt. So kann etwa die Feder und/oder der Stoßdämpfer auch in Höhe der Kupplung angebracht werden, so daß also nur das Gegenstück 12 bei einem plötzlichen Stoß gegen das Rohr 15 verschoben wird.

## Patentansprüche

1. Schubkupplung für den Anbau von Frontarbeitsgeräten wie z.B. Schneepflugschar (29), Planierschild, Schneeschleuder, Kehrbürste u.ä. an Kraftfahrzeuge mit Anhängevorrichtung (17), wobei die Schubkraft von dem vor dem Fahrzeug befindlichen Frontarbeitsgerät (29) mittels eines Schubrahmens (1, 2) unter dem Fahrzeug hindurch auf die Anhängevorrichtung (17) hinten, in der der Rahmen eingehängt ist, übertragen wird, dadurch gekennzeichnet, daß dieser Schubrahmen im vorderen Bereich über einen Ketten- und Seilzug (31) sowie einen Querführungsstab (23) beweglich am Fahrzeugtragwerk (32) befestigt ist.

2. Schubkupplung nach Anspruch 1, dadurch gekennzeichnet, daß der Schubrahmen (1, 2) etwa in der Mitte teilbar ist, wobei an der Trennstelle die Längsholme (4, 5) vom vorderen und hinteren Rahmenteil überlappen und durch je zwei Querbolzen (3, 6) verbunden werden, daß sich im Überlappungsbereich der Trennstelle an den Holmen (4, 5) mehrere Querbohrungen (3, 6) befinden und dadurch die Länge der Schubkupplung dem jeweiligen Kraftfahrzeug durch entsprechendes Einsetzen der Querbolzen angepaßt werden kann und daß nach Herausnehmen der beiden hinteren Bolzen (6) das hintere Rahmenteil (2) um die vorderen Querbolzen nach vorne umgeklappt werden kann.

3. Schubkupplung nach Anspruch 1, dadurch gekennzeichnet, daß das am hinteren Ende befindliche, nach oben gekröpfte Kupplungsende (11) mit dem zur Fahrzeughängevorrichtung (17) passenden Gegenstück (12) nach Lösen einer Verriegelung (7) seitlich oder nach hinten umlegbar ist.

4. Schubkupplung nach Anspruch 3, dadurch gekennzeichnet, daß das Gegenstück (12) in der senkrechten Richtung verstellbar ist.

5. Schubkupplung nach Anspruch 1, dadurch gekennzeichnet, daß mindestens ein Gelenkende der Querführungsstange (23) an einer Gewindespindel (25) befestigt ist, durch welche der Abstand der zwei Drehpunkte verstellt werden kann.

6. Schubkupplung nach Anspruch 1, dadurch gekennzeichnet, daß sich auf den Holmen (4) des vorderen Rahmenteils (1) verstellbare Endanschläge (20) befinden, die bei ganz angehobenem Schubrahmen (1, 2) von unten am Fahrzeug anliegen.

7. Schubkupplung nach Anspruch 1, dadurch gekennzeichnet, daß ein Ende des Seil- oder Kettenzuges am Tragwerk des Fahrzeuges eingehängt ist und daß der Seil- oder Kettenzug vom Fahrzeugführerstand aus betätigbar ist.

8. Schubkupplung nach Anspruch 7, dadurch gekennzeichnet, daß die Hub- und Senkbewegung hydraulisch oder pneumatisch über den Seil- oder Kettenzug betätigt wird.

9. Schubkupplung nach Anspruch 8, dadurch gekennzeichnet, daß der Seil- oder Kettenzug eine mittels Gewindespindel (37) und Handkurbel (34) einstellbare Zusatzfeder (35) enthält, welche die erforderliche Motorkraft reduziert.

10. Schubkupplung nach einem der Ansprüche 3 und 4, dadurch gekennzeichnet, daß das Kupplungsende (11) in Fahrzeug-Längsrichtung gegen die Kraft einer Feder (38) verschiebbar ist.

11. Schubkupplung nach Anspruch 10, dadurch gekennzeichnet, daß zu der Feder (38) noch zusätzlich ein Stoßdämpfer (39) parallel gesetzt ist.

12. Schubkupplung nach einem der Ansprüche 10 und 11, dadurch gekennzeichnet, daß die Federkraft mit einer Gewindespindel (45) verstellbar ist.

13. Schubkupplung nach einem der Ansprüche 10—12, dadurch gekennzeichnet, daß zwei ineinander bewegliche Rohre (10, 13) als Bestandteil des Kupplungsendes (11) bzw. des Schubrahmen (1, 2) vorgesehen sind, die die Feder (38) enthalten und über Rollen (40) aufeinander gleiten.

## Revendications

1. Accouplement à poussée pour l'attelage d'éléments de travail frontal comme par exemple un soc de chasse-neige (29), un bouclier d'aplanissement, un catapulte-neige, une brosse de balayage et autres, à des véhicules ayant un dispositif de remorque (17), la force de poussée étant transmise à partir de l'élément de travail frontal (29) se trouvant devant le véhicule par l'intermédiaire d'un cadre de poussée (1, 2) endessous du véhicule vers le dispositif de remorque (17) à l'arrière, où le cadre est accroché, caractérisé en ce que ce cadre de poussée est fixé de façon mobile, dans la partie frontale du châssis (32) d'un véhicule, à l'aide d'un moufle à chaîne ou câble (31) ainsi que d'une barre de guidage transversale (23).

2. Accouplement à poussée selon la revendication 1, caractérisé en ce que le cadre de poussée (1, 2) peut être séparé en deux parties à peu près au milieu, lès longerons (4, 5) de la partie arrière et de la partie avant du cadre chevauchant au point de séparation et étant connectés par deux boulons transversaux (3, 6), que dans la zone de chevauchement du point de séparation plusieurs alésages transversaux (3, 6) sont prévus aux traverses (4, 5), et que cela permet d'ajuster la longueur de l'accouplement à poussée au véhicule respectif par emplacement approprié des boulons transversaux, et de plier en avant la partie arrière du cadre (2) après avoir enlevé les deux boulons arrières (6), les boulons transversaux avant servant alors de pivot.

3. Accouplement à poussée selon la revendication 1, caractérisé en ce qu'après déverouillage (7), l'extrémité d'accouplement (11) avec la contrepartie (12) adaptée au dispositif de remorque (17), qui est coudée vers le haut et se trouve à l'extrémité arrière, peut être escamotée latéralement ou vers l'arrière.

4. Accouplement à poussée selon la revendication 3, caractérisé en ce que la contrepartie (12) est ajustable en direction verticale.

5. Accouplement à poussée selon la revendication 1, caractérisé en ce qu'au moins une extrémité d'articulation de la barre de guidage transversale (23) est fixée à un pivot fileté (25), par lequel l'écart entre les deux points de rotation peut être ajusté.

6. Accouplement à poussée selon la revendication 1, caractérisé en ce que les longerons (4) de la partie avant (1) du cadre portent des butées d'arrêt ajustables (20), qui s'appliquent d'en bas au véhicule lorsque le cadre de poussée (1, 2) est complètement levé.

7. Accouplement à poussée selon la revendication 1, caractérisée en ce qu'une extrémité du moufle à câble ou à chaîne est accrochée au châssis du véhicule et que le moufle à câble ou à chaîne peut être actionné à partir du siège du chauffeur du véhicule.

8. Accouplement à poussée selon la revendication 7, caractérisé en ce que le mouvement d'élévation et de descente peut être effectué hydrauliquement ou pneumatiquement à l'aide du moufle à câble ou à chaîne.

9. Accouplement à poussée selon la revendication 8, caractérisé en ce que le moufle à câble ou à chaîne comprend un ressort supplémentaire (35), qui peut être ajusté par un .pivot fileté (37) et une manivelle (34), et qui réduit la force motrice nécessaire.

10. Accouplement à poussée selon l'une des revendications 3 et 4, caractérisé en ce que l'extrémité d'accouplement (11) peut être déplacée en direction longitudinale du véhicule contre la force d'un ressort (38).

11. Accouplement à poussée selon la revendication 10, caractérisé en ce qu'en plus, un amortisseur (39) est mis en parallèle du ressort (38).

12. Accouplement selon l'une des revendications 10 et 11, caractérisé en ce que la force du ressort est ajustable par un pivot fileté (45).

13. Accouplement à poussée selon l'une des revendications 10 à 12, caractérisé en ce que deux tubes (10, 13), qui sont déplaçables l'un dans l'autre sont prévus en tant que partie intégrale de l'extrémité d'accouplement (11) ou du cadre de poussée (1, 2) respectivement, qui contiennent le ressort (38) et qui glissent l'un sur l'autre par l'intermédiaire de roues (40).

**Claims**

1. A thrust coupling device for mounting front tools, like for example a snow plow block (29), a scraper blade, a snow catapult, sweeping brush and so on, on vehicles having a trailer device (17), the thrust force being transmitted from the front tool (29) in front of the vehicle via a thrust frame (1, 2) underneath the vehicle back to the trailer device (17), to which the thrust frame is hooked, characterized in that this thrust frame is movably attached in the front range via a chain and cable pulley device (31) as well as via a transverse guide rod (23) to the vehicle support frame (32).

2. A thrust coupling device according to claim 1, characterized in that the thrust frame (1, 2) can be divided approximately in the middle, the longitudinal stringers (4, 5) of the front and rear frame part overlapping at the separation point and being respectively interconnected by two cross bolts (3, 6), that in the overlapping area of the separation point several cross borings (3, 6) are provided in the stringers (4, 5), allowing the length of the thrust coupling device to be adjusted to the respective vehicle by appropriate fitting of the cross bolts, and that after removal of the two rear bolts (6), the rear frame portion (2) can be pivoted about the front cross bolts.

3. A thrust coupling device according to claim 1, characterized in that the rear end (11) of the coupling device which bears the coupling counter-part (12) adjusted to the trailer device (17) and which is cranked upwards can be folded back or sidewards after release of a bolt (7).

4. A thrust coupling device according to claim 3, characterized in that the counter-part (12) is adjustable in the vertical direction.

5. A thrust coupling device according to claim 1, characterized in that at least one articulation terminal of the transverse guide rod (23) is fixed to a threaded spindle (25) by which the distance of the two pivot points can be adjusted.

6. A thrust coupling device according to claim 1, characterized in that adjustable end stops (20) are disposed on the stringers (4) of the front frame part (1) which are applied from below against the vehicle when the thrust frame (1, 2) is completely lifted.

7. A thrust coupling device according to claim 1, characterized in that one end of the cable or chain pulley device is hooked into the support frame of the vehicle and that the cable or chain pulley device can be remotely operated from the driver's seat of the vehicle.

8. A thrust coupling device according to claim 7, characterized in that the up and down movement is carried out hydraulically or pneumatically via the cable-or chain pulley device.

9. A thrust coupling device according to claim 8, characterized in that the cable or chain pulley device comprises an additional spring (35) which can be acharged via a threaded spindle (37) and a hand crank (34) and which reduces the necessary motor power.

10. A thrust coupling device according to one of claims 3 and 4, characterized in that the end (11) of the coupling device can be displaced in the longitudinal direction of the vehicle against the force of a spring (38).

11. A thrust coupling device according to claim 10, characterized in that a shock-absorber (39) is further arranged in parallel to the spring (38).

12. A thrust coupling device according to one of claims 10 and 11, characterized in that the force of the spring is adjustable by means of a threaded spindle (45).

13. A thrust coupling device according to one of claims 10 to 12, characterized in that two tubes (10, 13) which can be moved one inside the other are provided as a part of the end of the coupling device (11) or the thrust frame (1, 2) respectively, which contain the spring (38) and which slide on each other via rolls (40).

FIG.1

29  30  31  22  21  23  25  24  32

1  3  6  2

12  15

16

28  27  34  26  32  20  9  4  5  9

10  17  11  7  13  19

FIG.2

2  10  7  13  14

16

15

12

0 081 841

**0 081 841**

**FIG.3**

2

FIG.4

29  30  34     22  21  23     20  1      3        6   2

12  15

17  10  13  14

0 081 841

29  13  2  1          3

FIG.5

FIG. 6